# EUROPEAN PATENT APPLICATION

(11) **EP 3 200 047 A1**
(43) Date of publication of application: **02.08.2017**
(21) Application number: 17153131.2
(22) Date of filing: 25.01.2017
(51) Int. Cl.: G06F 3/01, G06F 3/023

(54) **INFORMATION PROCESSING APPARATUS AND RELATED PROGRAM**

(30) Priority: 29.01.2016 JP 2016016026
(71) Applicant: Toshiba TEC Kabushiki Kaisha, Tokyo 141-0032 (JP)
(72) Inventor: MOCHIZUKI, Katsuhito, Shinagawa-ku, Tokyo 141-8562 (JP)
(74) Representative: Takeuchi, Maya

(57) **Abstract**

An information processing apparatus according to an embodiment includes a memory unit which stores information corresponding to at least a first predetermined position, and a display. A transmitter periodically transmits a signal indicating a position movement of the transmitter at predetermined intervals. A controller determines whether the transmitter is substantially paused at the first predetermined position based on the current position and acceleration indicated in the periodically transmitted signals. The controller controls the display to display a predetermined first screen when the transmitter is determined to be substantially paused at the first predetermined position.

## Description

### FIELD

The present invention relates in general to the field of information processing technology and, in particular, to an information processing apparatus and a method for processing information, as well as a non-transitory computer readable medium containing a program that causes a computer including a memory unit and a display, to perform such method.

### BACKGROUND

An information processing apparatus may perform a process with a predetermined operation performed by a user as a trigger. For example, when an information processing apparatus is a point of sales (POS) terminal, an operator may pick up merchandise (e.g., tobacco or fish cake) in accordance with a consumer's order and then perform an operation to cause the POS terminal to display a screen related to sales registration of the merchandise. Then, the POS terminal displays the screen in accordance with the operation of the operator.

However, the information processing apparatus of the related art may not perform a process before it receives the predetermined operation from the operator. Therefore, when an action is required to be taken before the operator performs the predetermined operation, it takes time until the process is performed.

To solve such problems, there is provided an information processing apparatus comprising:
a memory unit which stores information corresponding to at least a first predetermined position;
a display;
a transmitter configured to periodically transmit a signal indicating a position movement of the transmitter at predetermined intervals; and
a controller configured to
   determine whether the transmitter is substantially paused at the first predetermined position based on the current position and acceleration indicated in the periodically transmitted signals,
   control the display to display a predetermined first screen when the transmitter is determined to be substantially paused at the first predetermined position.

Preferably, the transmitter is associated with a gyro sensor which detects a moving direction of the transmitter and an acceleration sensor which detects an acceleration of the transmitter, and
the signal indicates that the position movement of the transmitter is based on output of the gyro sensor and the acceleration sensor.

Preferably still, the memory unit further stores a home position of the transmitter, and
the controller determines whether the transmitter is substantially paused at the first predetermined position further based on the home position.

Preferably yet, the controller is further configured to
receive a process termination input, and
set a current position of the transmitter as the home position in the memory unit, based on the signal transmitted by the transmitter at a time of receiving the process termination input.

In the above apparatus, the predetermined first screen preferably includes a plurality of selectable icons.

Suitably, the at least a first predetermined position includes the first predetermined position and a second predetermined position different from the first predetermined position, and
the controller is further configured to
determine whether the transmitter is substantially paused at the second predetermined position based on the current position and acceleration indicated in the periodically transmitted signals, and
control the display to display a predetermined second screen when the transmitter is determined to be substantially paused at the second predetermined position.

In the above apparatus,
the predetermined first screen preferably includes a plurality of selectable icons corresponding to items located near the first predetermined position, and
the predetermined second screen preferably includes a plurality of selectable icons corresponding to items located near the second predetermined position.

The invention also relates to a method for processing information comprising the steps of:
storing in the memory unit, in advance, information corresponding to at least a first predetermined position;
periodically receiving, from a transmitter, a signal indicating a position movement of the transmitter;
determining whether the transmitter is substantially paused at the first predetermined position based on the current position and acceleration indicated in the periodically transmitted signals; and
controlling the display to display a predetermined first screen when the transmitter is determined to be substantially paused at the first predetermined position.

Conveniently, the received periodic signal indicated the position movement of the transmitter is based on output of a gyro sensor and an acceleration sensor associated with the transmitter.

Conveniently still, the method further comprises the steps of:
storing a home position of the transmitter, and
determining whether the transmitter is substantially paused at the first predetermined position further based on the home position.

Conveniently yet, the method, further comprises the steps of:
receiving a process termination input, and
setting a current position of the transmitter as the home position in the memory unit, based on the signal transmitted by the transmitter at a time of receiving the process termination input.

In the above method, the predetermined first screen preferably includes a plurality of selectable icons.

Suitably, at least the first predetermined position includes the first predetermined position and a second predetermined position different from the first predetermined position, and
the method further comprises the steps of:
determining whether the transmitter is substantially paused at the second predetermined position based on the current position and acceleration indicated in the periodically transmitted signals, and
controlling the display to display a predetermined second screen when the transmitter is determined to be substantially paused at the second predetermined position.

In the above method, the predetermined first screen includes a plurality of selectable icons corresponding to items located near the first predetermined position, and
the predetermined second screen includes a plurality of selectable icons corresponding to items located near the second predetermined position.

The invention further relates to a non-transitory computer readable medium containing a program that causes a computer including a memory unit and a display, to perform the method as defined above.

The invention also concerns an information processing apparatus comprising:
a memory unit which stores information corresponding to at least a first predetermined position;
a transmitter configured to periodically transmit a signal indicating a position movement of the transmitter at predetermined intervals;
a determining unit configured to determine whether the transmitter is substantially paused at the first predetermined position based on the current position and acceleration indicated in the periodically transmitted signals; and
a processing unit configured perform a process related to the first predetermined position when the transmitter is determined to be substantially paused at the first predetermined position.

Suitably, the transmitter is associated with a gyro sensor which detects a moving direction of the transmitter and an acceleration sensor which detects an acceleration of the transmitter, and
the signal indicates the position movement of the transmitter is based on output of the gyro sensor and the acceleration sensor.

Suitably still, the memory unit further stores a home position of the transmitter, and
the determining unit determines whether the transmitter is substantially paused at the first predetermined position further based on the home position.

Suitably yet, the further comprises:
a home setting unit configured to
   receive a process termination input, and
   set a current position of the transmitter as the home position in the memory unit, based on the signal transmitted by the transmitter at a time of receiving the process termination input.

In the above apparatus, the process related to the first predetermined position preferably includes displaying, on a display unit, a predetermined first screen.

In the above apparatus also,
the predetermined first screen includes a plurality of selectable icons corresponding to items located near the first predetermined position.

The invention also concerns a method for processing information comprising the steps of:
Storing, in a memory unit, information corresponding to at least a first predetermined position;
periodically transmitting, by a transmitter, a signal indicating a position movement of the transmitter at predetermined intervals;
determining, by a determining unit, whether the transmitter is substantially paused at the first predetermined position based on the current position and acceleration indicated in the periodically transmitted signals; and
performing, by a processing unit, a process related to the first predetermined position when the transmitter is determined to be substantially paused at the first predetermined position.

The invention further concerns a non-transitory computer readable medium or a computer program product containing a program that causes a computer including a memory unit and a display, to perform the method as defined above.

### DESCRIPTION OF THE DRAWINGS

The above and other objects, features and advantages of the present invention will be made apparent from the following description of the preferred embodiments, given as non-limiting examples, with reference to the accompanying drawings, in which:
FIGS. 1A and 1B are schematic views illustrating a positional relationship between a POS terminal and a merchandise shelf.
FIG. 2 is a block diagram illustrating a hardware configuration of a wearable terminal.
FIG. 3 is a perspective view illustrating the POS terminal.
FIG. 4 is a block diagram illustrating a hardware configuration of the POS terminal.
FIG. 5 illustrates an example of a settings screen of the POS terminal.
FIG. 6 is a memory map illustrating an example of a distance memory section stored in the POS terminal.
FIG. 7 illustrates how the POS terminal determines a position of the wearable terminal.
FIG. 8 is a functional block diagram illustrating an example configuration of the POS terminal.
FIGS. 9-12 are flowcharts illustrating an example sequence of operations of a control process of the POS terminal.
FIG. 13 illustrates an example operation screen of the POS terminal.
FIG. 14 illustrates a signage system according to a second embodiment.
FIG. 15 is a block diagram illustrating an example configuration of a server.
FIG. 16 is a flowchart illustrating an example sequence of operations of a control process of the server.

### DETAILED DESCRIPTION

Embodiments provide an information processing apparatus and a software program which automatically perform a process related to an action required before a predetermined operation, without first performing the predetermined operation.

An information processing apparatus according to an embodiment includes a memory unit which stores information corresponding to at least a first predetermined position, and a display. A transmitter periodically transmits a signal indicating a position movement of the transmitter at predetermined intervals. A controller determines whether the transmitter is substantially paused at the first predetermined position based on the current position and acceleration indicated in the periodically transmitted signals. The controller controls the display to display a predetermined first screen when the transmitter is determined to be substantially paused at the first predetermined position.

### (First Embodiment)

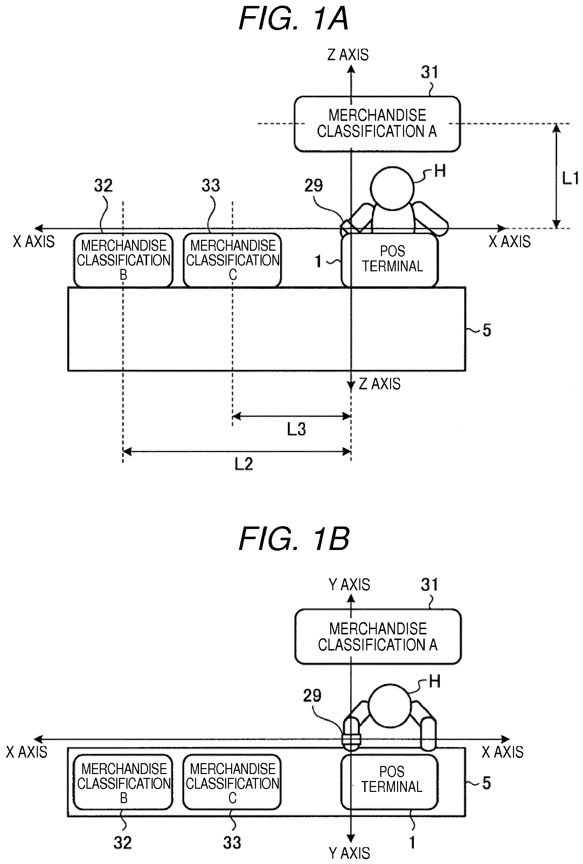

Hereinafter, an information processing apparatus and a software program according to a first embodiment will be described in detail with reference to FIGS. 1 to 13. In the first embodiment, a POS terminal is an example of the information processing apparatus. However, the present disclosure is not limited by the following embodiment.

FIGS. 1A and 1B are schematic views illustrating a positional relationship between a POS terminal 1 and a merchandise shelf. FIG. 1A illustrates the POS terminal 1 installed in a store, viewed from a consumer side. FIG. 1B illustrates the POS terminal 1 viewed from the top side. In FIGS. 1A and 1B, the POS terminal 1 performs a sales registration process and a settlement process for merchandise sold in the store. A storage unit 31 stores merchandise belonging to a merchandise classification A. The merchandise included in the merchandise classification A is, for example, merchandise required for age verification. A storage unit 32 stores merchandise belonging to a merchandise classification B to which a bar code cannot be affixed. A storage unit 33 stores merchandise belonging to a merchandise classification C to which a bar code cannot be affixed.

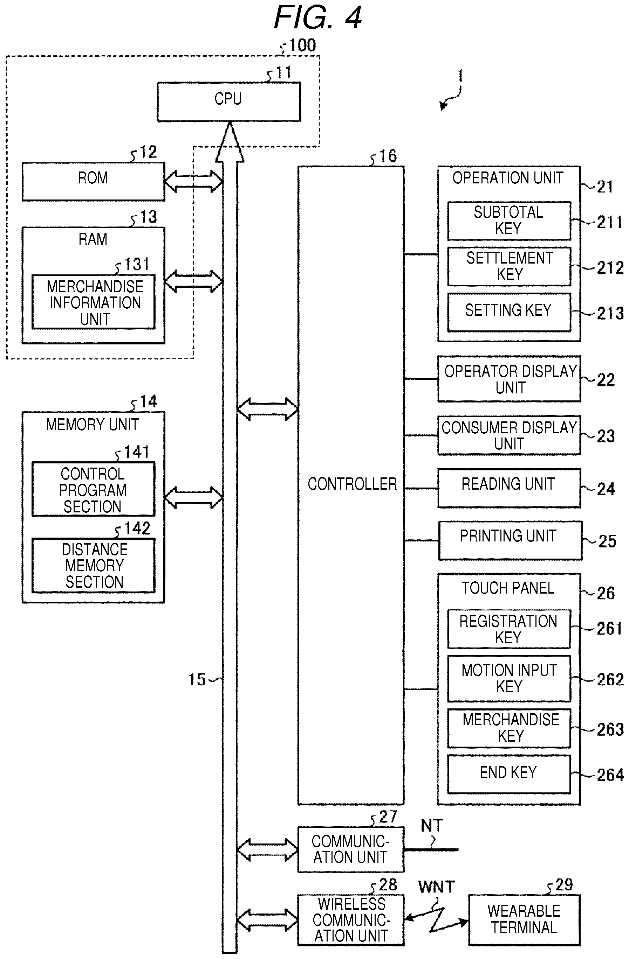

The term "sales registration process" used herein refers to a process of reading and displaying merchandise information such as names and prices of merchandise sold to consumers, from, for example, a merchandise master (not illustrated) based on merchandise codes specifying the merchandise, and storing the merchandise information in a merchandise information unit 131 (see FIG. 4). The term "settlement process" used herein refers to a process of displaying settlement information such as a total amount of registered merchandise, money received from consumers, or change, based on the merchandise information stored in the merchandise information unit 131. The settlement process also includes a process of issuing a receipt on which the merchandise information and the settlement information are printed.

As illustrated in FIGS. 1A and 1B, the POS terminal 1 is positioned at the right end on a table 5. The storage unit 32 is positioned at the left end on the table 5. The storage unit 33 is positioned between the POS terminal 1 and the storage unit 32 on the table 5. The storage unit 31 is positioned behind and above an operator H who stands behind the POS terminal 1 on the table 5.

Here, X, Y, and Z axes will be described. In FIG. 1A, a horizontal direction (the arrangement direction of the POS terminal 1, the storage unit 32, and the storage unit 33) corresponds to an X axis. In FIG. 1A, a vertical direction (the arrangement direction of the POS terminal 1 and the storage unit 31) corresponds to a Z axis. In FIG. 1B, a horizontal direction corresponds to the X axis. In FIG. 1B, a vertical direction (the arrangement direction of the POS terminal 1 and the storage unit 31) corresponds to a Y axis. The, the X, Y and Z axes are perpendicular to each other.

The operator H who operates the POS terminal 1 has a wearable terminal 29 (transmitter) worn on his/her arm. The wearable terminal 29 is, for example, of a wristwatch type. The wearable terminal 29 is a computer equipped with a gyro sensor and an acceleration sensor. The gyro sensor is a well-known sensor that detects a moving direction of the wearable terminal 29. The gyro sensor detects the moving direction of the wearable terminal 29 by outputting a signal corresponding to, for example, contact of a conductive metal movable contact point with fixed contact points provided in three directions. The acceleration sensor is a well-known sensor that detects an acceleration with which the wearable terminal 29 is being moved. The acceleration sensor is, for example, a piezo-resistive tri-axial acceleration sensor, a capacitance tri-axial acceleration sensor, or a thermal detection type tri-axial acceleration sensor.

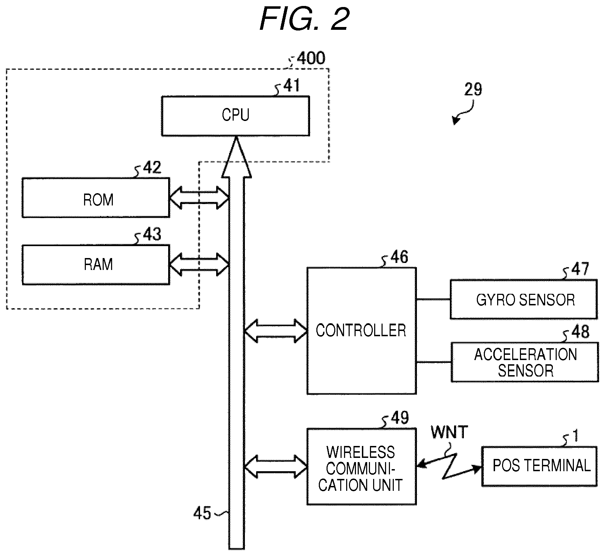

FIG. 2 is a block diagram illustrating an example configuration of the wearable terminal 29. As illustrated in FIG. 2, the wearable terminal 29 includes a central processing unit (CPU) 41, a read only memory (ROM) 42, a random access memory (RAM) 43, etc. The CPU 41 is a controller. Various software programs are stored in the ROM 42. Various types of data are deployed on the RAM 43. The CPU 41, the ROM 42, and the RAM 43 are interconnected via a data bus 45. The CPU 41, the ROM 42, and the RAM 43 constitute a control unit 400. That is, when the CPU 41 operates according to a control software program which is stored in the ROM 42 and deployed on the RAM 43, the control unit 400 performs a control process to be described later.

In addition, the controller 400 is connected with a controller 46, a gyro sensor 47 and an acceleration sensor 48 via the data bus 45.

In addition, the control unit 400 is connected with a wireless communication unit 49 via the data bus 45. The wireless communication unit 49 transmits a moving direction detected by the gyro sensor 47 and an acceleration detected by the acceleration sensor 48 to the POS terminal 1 via a wireless communication network WNT. The wireless communication unit 49 transmits the moving direction and the acceleration at a predetermined interval (e.g., every 1/3 second). The moving direction and the acceleration may be collectively referred to as "movement information."

By transmitting the movement information of the wearable terminal 29 to the POS terminal 1, the wearable terminal 29 substantially transmits the movement information of the operator H who wears the wearable terminal 29 to the POS terminal 1.

The POS terminal 1 calculates a movement distance of the wearable terminal 29 based on the movement information received from the wearable terminal 29. Specifically, the POS terminal 1 calculates movement distances of the wearable terminal 29 (that is, the operator H) in the X, Y and Z-axes directions. In addition, the POS terminal 1 determines whether or not the wearable terminal 29 is stationary, based on the received movement information.

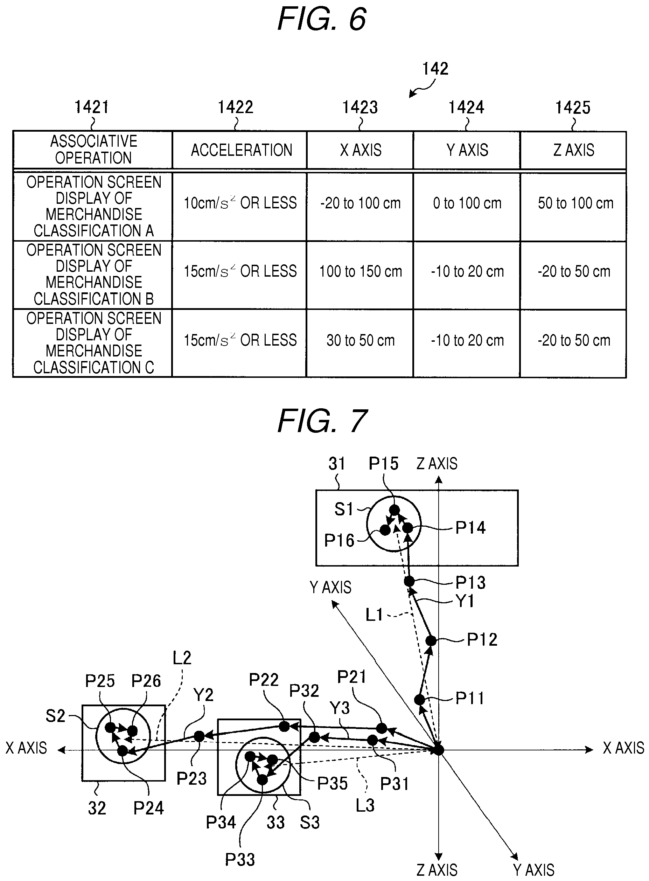

In FIG. 1, the operator H moves from the position of the POS terminal 1 by a distance L2 and takes a merchandise item belonging to the merchandise classification B out of the storage unit 32. In addition, the operator H moves from the position of the POS terminal 1 by a distance L3 (shorter than L2) and takes a merchandise item belonging to the merchandise classification C out of the storage unit 33. In addition, the operator H moves from the position of the POS terminal 1 by a distance L1 and takes a merchandise item belonging to the merchandise classification A out of the storage unit 31. Details thereof will be described below with reference to FIG. 7.

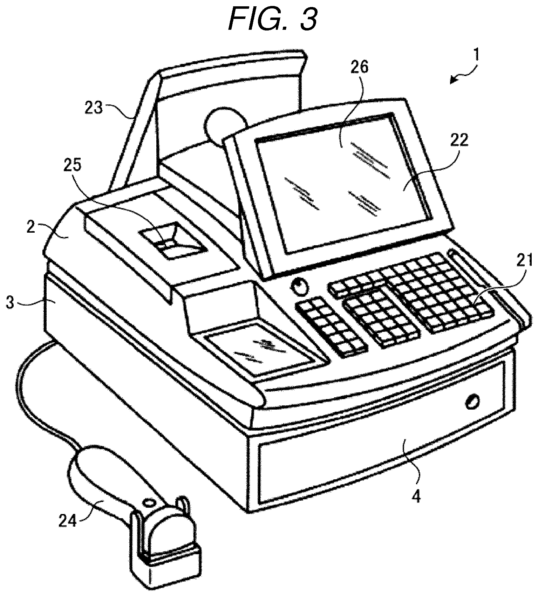

The POS terminal 1 will now be described. FIG. 3 is a perspective view illustrating the POS terminal 1. As illustrated in FIG. 3, the POS terminal 1 includes a main body 2 and a money storage unit 3. The main body 2 includes an operation unit 21, an operator display unit 22, a consumer display unit 23, a reading unit 24, a printing unit 25, and a touch panel 26. The operation unit 21 is a keyboard including various keys such as a ten key and functional keys. The operator display unit 22 is configured with, for example, a liquid crystal panel and displays information to the operator. The consumer display unit 23 is configured with, for example, a liquid crystal panel and displays information to the consumer. The money storage unit 3 accommodates a drawer 4 storing money on a per denomination basis in such a manner that the drawer 4 can be drawn in/out.

The reading unit 24 is configured with, for example, a light emitter and a charge coupled device (CCD) line sensor. When the light emitter emits light, and the CCD line sensor receives the light reflected by a symbol such as a bar code affixed to a merchandise item, the reading unit 24 reads the symbol. The reading unit 24 outputs the read symbol to the POS terminal 1. The POS terminal 1 analyzes the symbol received from the reading unit 24 and acquires a merchandise code included in the symbol. The merchandise code specifies the particular merchandise.

The printing 25 is configured with, for example, a line thermal printer. The printing unit 25 prints merchandise information and settlement information of merchandise sold in the POS terminal 1 on a receipt sheet and issues a receipt. The touch panel 26 is set on a display surface of the operator display unit 22 and the consumer display unit 23. By operating the touch panel 26 on a position corresponding to a key displayed on the operator display unit 22 and the consumer display unit 23, the touch panel 26 transmits a key signal of the displayed key. In the following description, the meaning of "operating the touch panel 26 on a position corresponding to a key displayed on a display unit" will be simplified as "operating a key displayed on a display unit."

The hardware configuration of the POS terminal 1 will now be described. FIG. 4 is a block diagram illustrating the hardware configuration of the POS terminal 1. As illustrated in FIG. 4, the POS terminal 1 includes a CPU 11, a ROM 12, a RAM 13, a memory unit 14, etc. The CPU 11 is a controller. Various software programs are stored in the ROM 12. Various types of data are deployed on the RAM 13. The memory unit 14 stores various software programs. The CPU 11, the ROM 12, the RAM 13, and the memory unit 14 are interconnected via a data bus 15. The CPU 11, the ROM 12 and the RAM 13 constitute a control unit 100. That is, when the CPU 11 operates according to a control software program which is stored in the ROM 12 or the memory unit 14 and deployed on the RAM 13, the control unit 100 performs a control process to be described later.

The RAM 13 includes a merchandise information unit 131 for storing merchandise information. The memory unit 14 is configured with a nonvolatile memory, such as a hard disk drive (HDD) or a flash memory, in which stored information is held even when power is turned off, and includes a control program section 141 storing a control software program.

In addition, the memory unit 14 includes a distance memory section 142 (which will be described in detail with reference to FIG. 6). The distance memory section 142 stores a distance from a home position to a position of one of the storage units 31, 32, and 33. Here, the home position refers to a position of the wearable terminal 29 when a settlement key 212 is operated. However, since the settlement key 212 is set in the POS terminal 1, the home position is substantially the position of the POS terminal 1. The home position is a reference position used to determine whether or not the wearable terminal 29 stays at a particular position. Each of the positions of the storage units 31, 32, and 33 corresponds to the particular position.

In addition, the distance memory section 142 stores acceleration information with a certain range. When an acceleration of the wearable terminal 29 detected by the acceleration sensor is within a range of acceleration stored in the distance memory section 142, the control unit 100 determines that the wearable terminal 29 stays at a position of a storage unit.

The control unit 100 is connected to the operation unit 21, the operator display unit 22, the consumer display unit 23, the reading unit 24, the printing unit 25, and the touch panel 26 via the data bus 15 and a controller 16.

The operation unit 21 includes a subtotal key 211, a settlement key 212, and a setting key 213. The subtotal key 211 declares that the POS terminal 1 terminates a sales registration process and transitions to a settlement process. The settlement key 212 is, for example, a deposit/cash settlement key or a credit settlement key and is operated when transaction with a consumer is finalized (sales to the consumer is finalized). The setting key 213 is operated when a distance from the home position signal or an acceleration signal is received in the POS terminal 1.

The touch panel 26 functions as a registration key 261, a motion input key 262, a merchandise icon 263, and an end key 264.

In addition, the control unit 100 is connected with a communication unit 27 via the data bus 15. The communication unit 27 communicates information with another POS terminal 1 via a communication network NT. In addition, the control unit 100 is connected with a wireless communication unit 28 via the data bus 15. The wireless communication unit 28 receives movement information from the wearable terminal 29 via the wireless communication network WNT.

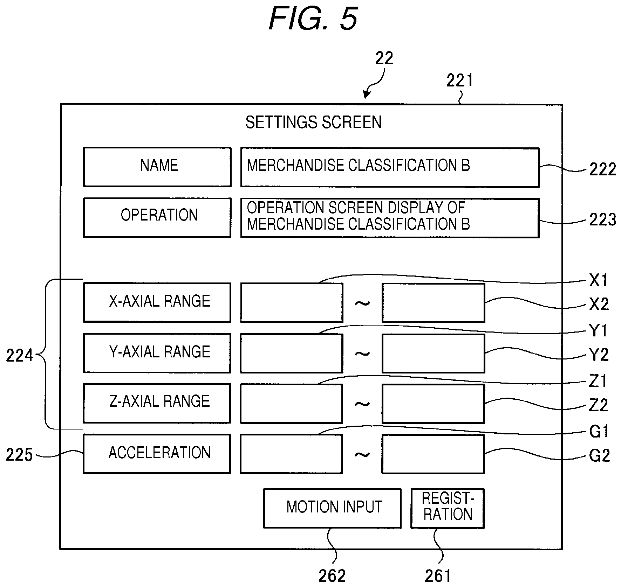

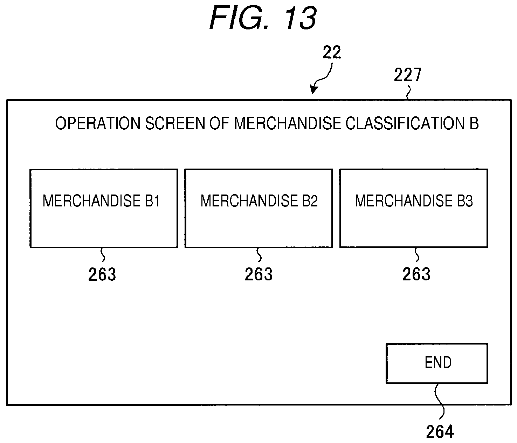

Next, a settings screen 221 of the POS terminal 1 for setting a distance to a storage unit and an acceleration of the wearable terminal 29 in the distance memory section 142 will be described. FIG. 5 is a view illustrating an example of the settings screen 221 of the POS terminal 1. The operator H operates the setting key 213 and inputs any of the merchandise classifications A, B and C so as to display the settings screen 221. FIG. 5 represents a settings screen 221 of the merchandise classification B. In FIG. 5, the settings screen 221 displays a name section 222, an operation section 223, a range section 224, and an acceleration section 225. A merchandise classification is input in the name section 222. When a condition set in the range section 224 is satisfied, an operation screen automatically displayed on the operator display unit 22 is input in the operation section 223. In the example of FIG. 5, an operation screen for sales registration of a merchandise belonging to the merchandise classification B (see FIG. 13) is displayed.

A range of a distance from the home position to a storage unit is input in the range section 224. In the example of FIG. 5, a range of a distance from the home position to the storage unit 32 is input in the range section 224. Specifically, the range section 224 has areas X1 and X2, areas Y1 and Y2, and areas Z1 and Z2. A range of a distance from the home position to the storage unit in the X-axis direction is input in the areas X1 and X2. A range of a distance from the home position to the storage unit in the Y-axis direction is input in the areas Y1 and Y2. A range of a distance from the home position to the storage unit in the Z-axis direction is input in the areas Z1 and Z2.

A range of acceleration at a position of a storage unit is input in the acceleration section 225. Specifically, the acceleration section 225 has an area G1 in which a lower limit of acceleration at a position of a storage unit is input and an area G2 in which an upper limit of acceleration at the position of the storage unit is input. In addition, the settings screen 221 displays the motion input key 262 and the registration key 261. The motion input key 262 and the registration key 261 will be described in detail.

FIG. 6 is a memory map illustrating the distance memory section 142 installed in the memory unit 14 of the POS terminal 1. The distance memory section 142 stores movement information transmitted by the wearable terminal 29 at a particular position (a distance from the home position and an acceleration of the wearable terminal 29 at the particular position) and a process related to the particular position (a screen for sales registration of a merchandise displayed at the particular position) in association with each other. Specifically, the distance memory section 142 stores a distance from the home position to each of the storage units 31, 32, and 33. More specifically, the distance memory section 142 divides a distance from the home position to the position of the storage unit 31 into distance components in the X, Y and Z-axis directions, and stores the distance components with a certain range. In addition, the distance memory section 142 divides a distance from the home position to the position of the storage unit 32 into distance components in the X, Y and Z-axis directions, and stores the distance components with a certain range. In addition, the distance memory section 142 divides a distance from the home position to the position of the storage unit 33 into distance components in the X, Y and Z-axis directions, and stores the distance components with a certain range. Here, as a result, a distance stored by the distance memory section 142 is equivalent to the particular position.

The distance memory section 142 includes an associative operation area 1421, an acceleration area 1422, an X-axis area 1423, a Y-axis area 1424, and a Z-axis area 1425. The associative operation area 1421 stores screen information of the operation screen (or an address of the operation screen) input in the operation section 223 of the settings screen 221. The acceleration area 1422 stores an acceleration used to determine whether or not the wearable terminal 29 stays at a particular position. The acceleration area 1422 stores a range of an acceleration input in the acceleration section 225 of the setting screen 221. Specifically, the acceleration area 1422 stores an acceleration input in the area G1 and the area G2 as a range of an acceleration. The X-axis area 1423 stores a range of an X-axial distance input in the range section 224 of the settings screen 221. Specifically, the X-axis area 1423 stores a range of a distance input in the areas X1 and X2. The Y-axis area 1424 stores a range of a Y-axial distance input in the range section 224 of the settings screen 221. Specifically, the Y-axis area 1424 stores a range of a distance input in the areas Y1 and Y2. The Z-axis area 1425 stores a range of a Z-axial distance input in the range section 224 of the settings screen 221. Specifically, the Z-axis area 1425 stores a range of a distance input in the areas Z1 and Z2.

In FIG. 6, an example range of the X-axial distance from the home position to the storage unit 31 which is stored in the distance memory section 142 is -20 cm to 100 cm. An example range of the Y-axial distance from the home position to the storage unit 31 is 0 to 100 cm. An example range of the Z-axial distance from the home position to the storage unit 31 is 50 cm to 100 cm. That is, when the movement distance of the wearable terminal 29 from the home position is -20 cm to 100 cm in the X-axis direction, 0 to 100 cm in the Y-axis direction, and 50 cm to 100 cm in the Z-axis direction, the control unit 100 determines that the wearable terminal 29 is positioned at the storage unit 31. The range of the acceleration stored in the distance memory section 142 is equal to or less than 10 cm/s² (where, the unit "cm/s²" means a rate of change in speed per second). That is, when the acceleration of the wearable terminal 29 at the position of the storage unit 31 within the latest predetermined interval (e.g., within one second in the latest) is equal to or less than 10 cm/s², the control unit 100 determines that the wearable terminal 29 stays at the position of the storage unit 31. That is, the control unit 100 determines that the operator H looks at or takes a merchandise item belonging to the merchandise classification A out of the storage unit 31.

In addition, a range of the X-axial distance from the home position to the storage unit 32 which is stored in the distance memory section 142 is 100 cm to 150 cm. A range of the Y-axial distance from the home position to the storage unit 32 is -10 cm to 20 cm. A range of the Z-axial distance from the home position to the storage unit 32 is -20 cm to 50 cm. That is, when the movement distance of the wearable terminal 29 from the home position is 100 cm to 150 cm in the X-axis direction, -10 cm to 20 cm in the Y-axis direction, and -20 cm to 50 cm in the Z-axis direction, the control unit 100 determines that the wearable terminal 29 is positioned at the storage unit 32. The range of the acceleration stored in the distance memory section 142 is equal to or less than 15 cm/s². That is, when the acceleration of the wearable terminal 29 at the position of the storage unit 32 within the latest predetermined interval (e.g., within one second in the latest) is equal to or less than 15 cm/s², the control unit 100 determines that the wearable terminal 29 stays at the position of the storage unit 32. That is, the control unit 100 determines that the operator H looks at or takes a merchandise item belonging to the merchandise classification B out of the storage unit 32.

In addition, a range of the X-axial distance from the home position to the storage unit 33 which is stored in the distance memory section 142 is 30 cm to 50 cm. A range of the Y-axial distance from the home position to the storage unit 33 is -10 cm to 20 cm. A range of the Z-axial distance from the home position to the storage unit 33 is -20 cm to 50 cm. That is, when the movement distance of the wearable terminal 29 from the home position is 30 cm to 50 cm in the X-axis direction, -10 cm to 20 cm in the Y-axis direction, and -20 cm to 50 cm in the Z-axis direction, the control unit 100 determines that the wearable terminal 29 is positioned at the storage unit 33. The range of the acceleration stored in the distance memory section 142 is equal to or less than 15 cm/s². That is, when the acceleration of the wearable terminal 29 at the position of the storage unit 33 within the latest predetermined interval (e.g., within one second in the latest) is equal to or less than 15 cm/s², the control unit 100 determines that the wearable terminal 29 stays at the position of the storage unit 33. That is, the control unit 100 determines that the operator H looks at or takes a merchandise item belonging to the merchandise classification C out of the storage unit 33.

Here, the numerical values of the distance and acceleration based on which the control unit 100 determines that the wearable terminal 29 stays at the positions of the storage units are different depending on the storage units 31, 32, and 33. This is because the operator's actions of handling the merchandises of the storage units are different from each other.

FIG. 7 illustrates how the POS terminal 1 determines a position of the wearable terminal 29. In FIG. 7, the wearable terminal 29 transmits movement information at predetermined intervals. An arrow Y1 indicates a track along which the wearable terminal 29 moves toward the storage unit 31. An arrow direction indicates a moving direction of the wearable terminal 29 based on an output from the gyro sensor 47. An arrow length indicates a movement distance of the wearable terminal 29 based on an output from the acceleration sensor 48. Points P11 to P16 indicate positions at which the wearable terminal 29 in the course of movement toward the storage unit 31 transmits the movement information every predetermined interval. In FIG. 7, the wearable terminal 29 moves up to the storage unit 31 in an order of P11, P12, P13, P14, P15, and P16.

When an acceleration of the wearable terminal 29 in the latest predetermined interval is equal to or less than 10 cm/s², the control unit 100 determines that the wearable terminal 29 stays at the same position. In FIG. 7, the wearable terminal 29 is positioned at positions of P14, P15, and P16 (within a circle S1) at which the movement information is received in the latest predetermined interval. The positions of P14, P15, and P16 are within a distance range stored in the distance memory section 142. In addition, accelerations of the wearable terminal 29 at P14, P15, and P16 are all equal to or less than 10 cm/s². In this case, the control unit 100 determines that the wearable terminal 29 stays at the position of the storage unit 31.

An arrow Y2 indicates a track along which the wearable terminal 29 moves toward the storage unit 32. An arrow direction indicates a moving direction of the wearable terminal 29 based on an output from the gyro sensor 47. An arrow length indicates a movement distance of the wearable terminal 29 based on an output from the acceleration sensor 48. Points P21 to P26 indicate positions at which the wearable terminal 29 in the course of movement toward the storage unit 32 transmits movement information every predetermined time. It is illustrated in FIG. 7 that the wearable terminal 29 moves up to the storage unit 32 in an order of P21, P22, P23, P24, P25, and P26.

When an acceleration of the wearable terminal 29 in the latest predetermined interval is equal to or less than 15 cm/s², the control unit 100 determines that the wearable terminal 29 stays at the same position. In FIG. 7, the wearable terminal 29 is positioned at positions of P24, P25, and P26 (within a circle S2) at which the movement information is received in the latest predetermined interval. The positions of P24, P25, and P26 are within a distance range stored in the distance memory section 142. In addition, accelerations of the wearable terminal 29 at P24, P25, and P26 are all equal to or less than 15 cm/s². In this case, the control unit 100 determines that the wearable terminal 29 stays at the position of the storage unit 32.

An arrow Y3 indicates a track along which the wearable terminal 29 moved toward the storage unit 33. An arrow direction indicates a direction of movement of the wearable terminal 29 based on an output from the gyro sensor 47. An arrow length indicates a distance of movement of the wearable terminal 29 based on an output from the acceleration sensor 48. Points P31 to P35 indicate positions at which the wearable terminal 29 in the course of movement toward the storage unit 33 transmits movement information every predetermined time. It is illustrated in FIG. 7 that the wearable terminal 29 moves in an order of P31, P32, P33, P34, and P35.

When an acceleration of the wearable terminal 29 in the latest predetermined interval is equal to or less than 15 cm/s², the control unit 100 determines that the wearable terminal 29 stays at the same position. In FIG. 7, the wearable terminal 29 is positioned at positions of P33, P34, and P35 (within a circle S3) at which the movement information is received in the latest predetermined interval. The positions of P33, P34, and P35 are within a distance range stored in the distance memory section 142. In addition, since accelerations of the wearable terminal 29 at P33, P34, and P35 are all equal to or less than 15 cm/s², the control unit 100 determines that the wearable terminal 29 stays at the position of the storage unit 33.

In addition, at the position of P22 in the middle of the movement of the operator H from the POS terminal 1 to the storage unit 32, the wearable terminal 29 is positioned at a point corresponding to the distance to the storage unit 33. However, since the acceleration of the wearable terminal 29 at the position of P22 is not equal to or less than 15 cm/s², the control unit 100 determines that the wearable terminal 29 does not stay at the position of the storage unit 33.

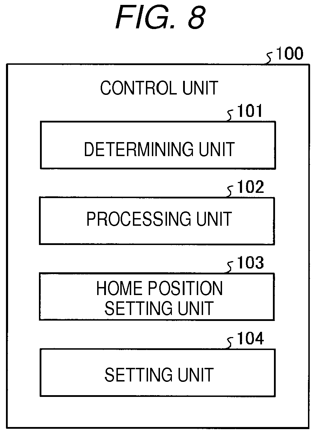

A control of the POS terminal 1 will now be described with reference to FIGS. 8 to 13. FIG. 8 is a functional block diagram illustrating the functional configuration of the POS terminal 1. By executing the control software program stored in the ROM 12 or the control program section 141 of the memory unit 14, the control unit 100 functions as a determining unit 101, a processing unit 102, a home position setting unit 103, and a setting unit 104.

The determining unit 101 determines whether or not the wearable terminal 29 stays at a position of a particular storage unit stored in the distance memory section 142 based on the movement information of the wearable terminal 29 which is transmitted by the wearable terminal 29.

The processing unit 102 displays a screen for sales registration of a merchandise displayed on the particular storage unit when it is determined by the determining unit 101 that the wearable terminal 29 stays at the position of the particular storage unit.

The home position setting unit 103 sets a position of the wearable terminal 29 based on the movement information transmitted by the wearable terminal 29 when the screen for sales registration of the merchandise displayed on the particular storage unit is displayed and the sales registration process is terminated, as a new home position, in a home position memory section.

The setting unit 104 sets a position of a particular storage unit transmitted by the wearable terminal 29 and a process of displaying a screen for sales registration of a merchandise displayed on the particular storage unit in the distance memory section 142 in association with each other.

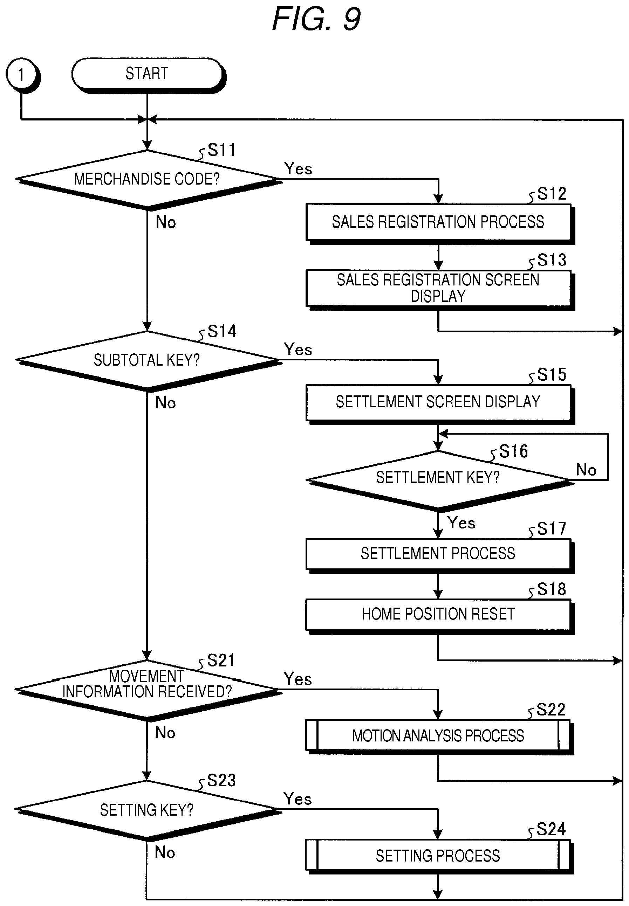

FIGS. 9 to 12 are flowcharts illustrating an example sequence of operations of a control process of the POS terminal 1. In FIG. 9, first, the control unit 100 determines whether or not a merchandise code is acquired, based on a symbol read in the reading unit 24 (S11). When it is determined that the merchandise code is acquired (Yes in S11), the control unit 100 reads merchandise information (merchandise name, price, etc.) of the merchandise specified by the acquired merchandise code and performs the sales registration process (S12). In this sales registration process, the read merchandise information is stored in the merchandise information unit 131. Then, the control unit 100 displays the merchandise information of the merchandise subjected to the sales registration process on a sales registration screen (S13). Then, the control unit 100 returns to S11.

After inputting merchandise codes of all merchandises sold, the operator H operates the subtotal key 211 to transition to the settlement process. When it is determined that the merchandise code is not acquired (No in S11), the control unit 100 determines whether or not the subtotal key 211 is operated (S14). When it is determined that the subtotal key 211 is operated (Yes in S 14), the control unit 100 displays a settlement screen that displays a total amount, etc. based on the merchandise information stored in the merchandise information unit 131 (S15). The operator H who has exchanged money with a consumer based on the settlement information operates the settlement key 212 in order to finalize the transaction with the consumer. The control unit 100 determines whether or not the settlement key 212 is operated (S16). When it is determined that the settlement key 212 is not operated (No in S16), the control unit 100 waits until the settlement key is operated. When it is determined that the settlement key 212 is operated (Yes in S16), the control unit 100 performs the settlement process for the merchandise dealt with the consumer based on the total amount and others displayed in S15 (S17). Then, the control unit 100 (the home position setting unit 103) performs a reset process of setting all the XYZ-axial distances from the home position of the wearable terminal 29 at the time of the operation of the settlement key 212 in S16 to "0" (S18). That is, a position of the wearable terminal 29 at the time of the operation of the settlement key 212 (at the time of termination of the process related to the particular position) in S16 is set, as a new home position, in the memory unit 14. This position serves as the home position until the settlement key 212 is operated later. Then, the control unit 100 returns to S11.

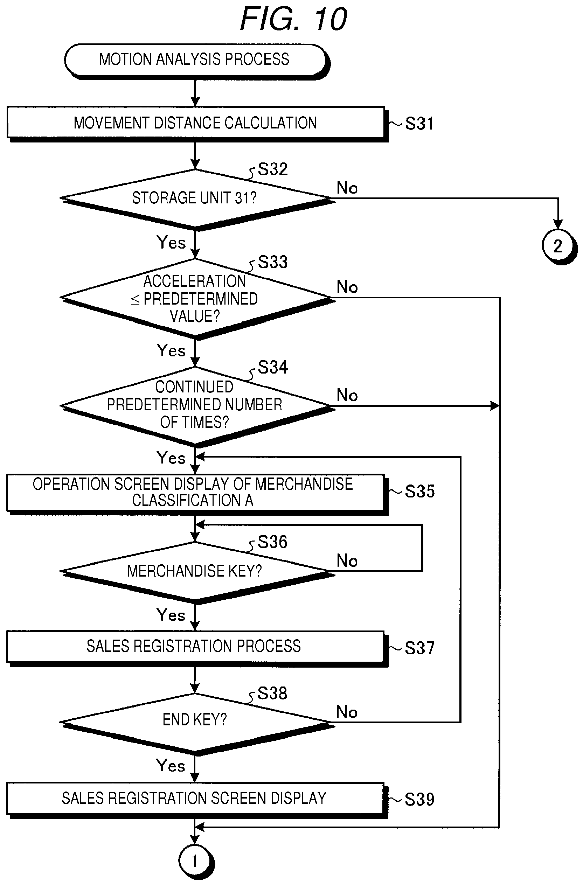

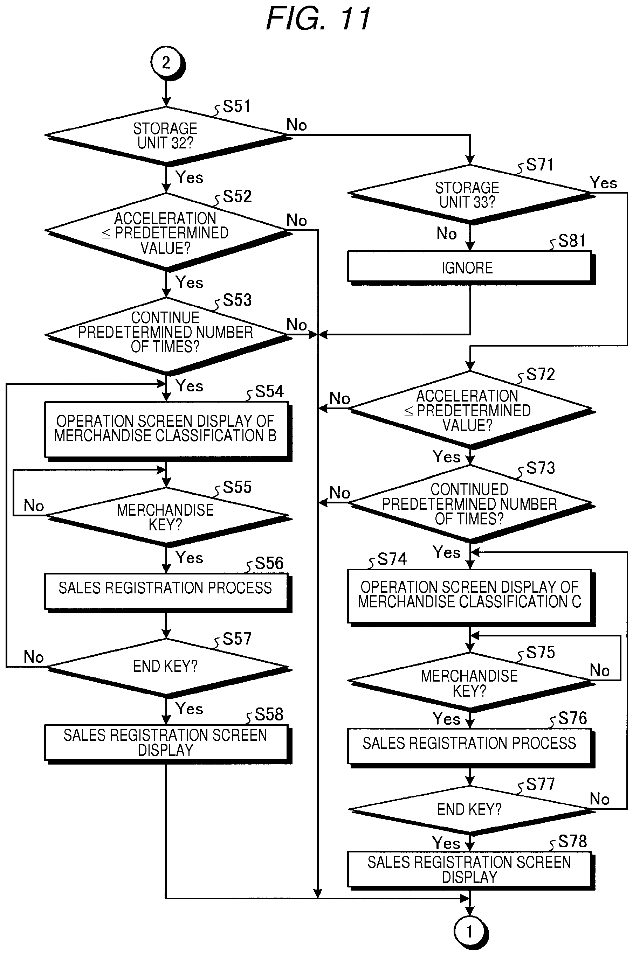

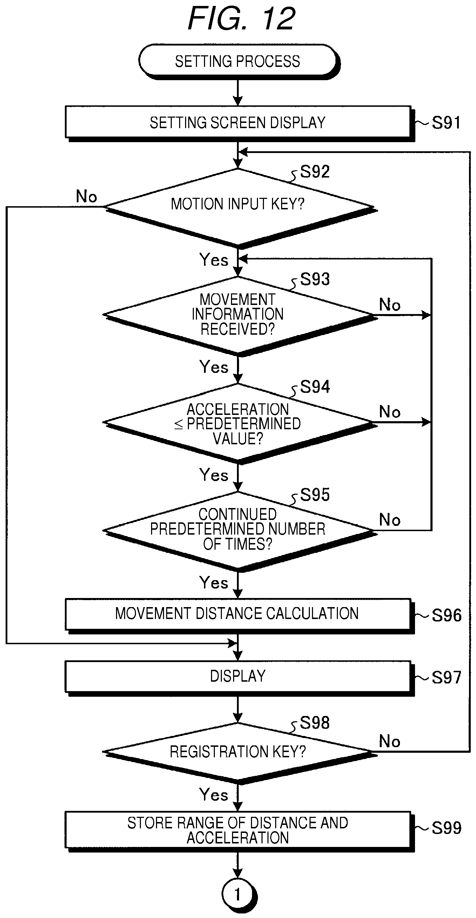

When it is determined that the subtotal key 211 is not operated (No in S14), the control unit 100 determines whether or not the movement information (moving direction and acceleration) is received from the wearable terminal 29 (S21). When it is determined that the movement information is received (Yes in S21), the control unit 100 performs a motion analysis process of the wearable terminal 29 (S22). The motion analysis process of the wearable terminal 29 will be described in detail with reference to FIGS. 10 and 11. Then, the control unit 100 returns to S 11. When it is determined that the movement information has not been received from the wearable terminal 29 (No in S21), the control unit 100 determines whether or not the setting key 213 is operated (S23). When it is determined that the setting key 213 is operated (Yes in S23), the control unit 100 performs a setting process for a movement distance of the wearable terminal 29 from the home position and an acceleration thereof (S24). The setting process related to the movement distance of the wearable terminal 29 from the home position and an acceleration thereof will be described in detail with reference to FIG. 12. Then, the control unit 100 returns to S11. When it is determined that the setting key 213 is not operated (No in S23), the control unit 100 returns to S11.

FIG. 10 is a flowchart illustrating a flow of the motion analysis process of the wearable terminal 29 in the POS terminal 1. As illustrated in FIG. 10, the control unit 100 (movement distance calculating unit) calculates XYZ-axial movement distances of the wearable terminal 29 from the home position based on the movement information received from the wearable terminal 29 (S31). Specifically, the control unit 100 counts time for which the wearable terminal 29 moves, and calculates the movement distances based on the movement time of the wearable terminal 29 and an acceleration included in the movement information.

Next, the control unit 100 (particular position determining unit) determines whether or not the wearable terminal 29 is located at the position of the storage unit 31, based on the calculated movement distances (S32). The fact that the wearable terminal 29 is located at the position of the storage unit 31 indicates that the operator H moved to the position of the storage unit 31. When it is determined that the wearable terminal 29 is located at the position of the storage unit 31 (Yes in S32), the control unit 100 (stay determining unit) determines whether or not the acceleration included in the received movement information is equal to or less than 10 cm/s² stored in the acceleration area 1422 (S33). When it is determined that the acceleration is equal to or less than 10 cm/s² (Yes in S33), the control unit 100 (stay determining unit) determines whether or not the acceleration equal to or less than 10 cm/s² is continuously received three times within the latest predetermined interval (S34). When it is determined that the acceleration is continuously received three times within the latest predetermined interval (Yes in S34), the control unit 100 (processing unit 102 or operation screen display unit) automatically displays an operation screen which displays merchandise keys (keys operated to designate merchandise items) of all merchandise items included in the merchandise classification A stored in the associative operation area 1421, as a process related to the particular position (S35). In order to sell a merchandise item drawn out of the storage unit 31, the operator H operates a merchandise key of the merchandise displayed on the operation screen. The control unit 100 performs a sales registration process for the merchandise of the operated merchandise key. Here, the operations of S32, S33, and S34 correspond to the determining unit 101.

The control unit 100 determines whether or not any merchandise key is operated (S36). When it is determined that a merchandise key is not operated (No in S36), the control unit 100 waits until any merchandise key is operated. When it is determined that any merchandise key is operated (Yes in S36), the control unit 100 performs a sales registration process for a merchandise corresponding to the operated merchandise key (S37). Next, the control unit 100 determines whether or not the end key is operated (S38). When it is determined that the end key is operated (Yes in S38), the control unit 100 displays a sales registration screen including merchandise information of the merchandise subjected to the sales registration process in S37 (S39). Then, the control unit 100 returns to S11. When it is determined that the end key is not operated (No in S38), the control unit 100 returns to S35.

At this time, when it is determined that the received acceleration is not equal to or less than 10 cm/s² (No in S33), the control unit 100 determines that the wearable terminal 29 does not stay though it moved to the position of the storage unit 31, and then returns to S 11. In addition, when it is determined that the acceleration equal to or less than 10 cm/s² is not continuously received three times within the latest predetermined interval (No in S34), the control unit 100 determines that the wearable terminal 29 does not stay at the position of the storage unit 31, and then returns to S 11.

Meanwhile, when it is determined in S32 that the wearable terminal 29 did not move from the home position to the position of the storage unit 31 (No in S32), the control unit 100 determines whether or not the wearable terminal 29 is located at the position of the storage unit 32, based on the calculated movement distances (S51). The fact that the wearable terminal 29 is located at the position of the storage unit 32 indicates that the operator H moved to the position of the storage unit 32. When it is determined that the wearable terminal 29 is located at the position of the storage unit 32 (Yes in S51), the control unit 100 determines whether or not the received acceleration is equal to or less than 15 cm/ stored in the acceleration area 1422 (S52). When it is determined that the acceleration is equal to or less than 15 cm/s² (Yes in S52), the control unit 100 determines whether or not the acceleration equal to or less than 15 cm/s² is continuously received three times within the latest predetermined interval (S53). When it is determined that the acceleration equal to or less than 15 cm/s² is continuously received three times within the latest predetermined interval (Yes in S53), the control unit 100 (the processing unit 102) automatically displays an operation screen 227 which displays merchandise icons 263 of all merchandises included in the merchandise classification B stored in the associative operation area 1421 (S54).

FIG. 13 is a view illustrating an example of display of an operation screen of the POS terminal 1. As illustrated in FIG. 13, the operation screen 227 of the merchandise classification B displayed on the operator display unit 22 displays the merchandise icons 263 of merchandises belonging to the merchandise classification B. In this embodiment, the merchandises belonging to the merchandise classification B are "merchandise B1," "merchandise B2," and "merchandise B3." Therefore, the control unit 100 displays three merchandise icons 263, i.e., a merchandise icon 263 designating the "merchandise B1," a merchandise icon 263 designating the "merchandise B2," and a merchandise icon 263 designating the "merchandise B3" on the operation screen 227. In addition, the operation screen 227 displays the end key 264 which ends the designation of the merchandises by the merchandise icons 263. The operator H operates a merchandise icon 263 of a merchandise drawn out of the storage unit 32, among the displayed merchandise icons 263.

Referring back to FIG. 11, the control unit 100 determines whether or not any merchandise icon 263 is operated (S55). When it is determined that any merchandise key is not operated (No in S55), the control unit 100 waits until any merchandise key is operated. When it is determined that any merchandise key is operated (Yes in S55), the control unit 100 performs a sales registration process for a merchandise corresponding to the operated merchandise icon 263 (S56). Next, the control unit 100 determines whether or not the end key 264 is operated (S57). When it is determined that the end key 264 is operated (Yes in S57), the control unit 100 displays a sales registration screen including merchandise information of the merchandise subjected to the sales registration process in S56 (S58). Then, the control unit 100 returns to S11. When it is determined that the end key 264 is not operated (No in S57), the control unit 100 returns to S54.

In addition, when it is determined that the received acceleration is not equal to or less than 15 cm/s² (No in S52), the control unit 100 determines that the wearable terminal 29 does not stay though it moved to the position of the storage unit 32, and then returns to S 11. In addition, when it is determined that the acceleration equal to or less than 15 cm/s² is not continuously received three times within the latest predetermined interval (No in S53), the control unit 100 determines that the wearable terminal 29 does not stay at the position of the storage unit 32, and then returns to S 11.

Meanwhile, when it is determined in S51 that the wearable terminal 29 did not move from the home position to the position of the storage unit 32 (No in S51), the control unit 100 determines whether or not the wearable terminal 29 is located at the position of the storage unit 33, based on the calculated movement distances (S71). The fact that the wearable terminal 29 is located at the position of the storage unit 33 indicates that the operator H moved to the position of the storage unit 33. When it is determined that the wearable terminal 29 is located at the position of the storage unit 33 (Yes in S71), the control unit 100 determines whether or not the acceleration included in the received movement information is equal to or less than 15 cm/s² stored in the acceleration area 1422 (S72). When it is determined that the acceleration is equal to or less than 15 cm/s² (Yes in S72), the control unit 100 determines whether or not the acceleration equal to or less than 15 cm/s² is continuously received three times within the latest predetermined interval (S73). When it is determined that the acceleration is continuously received three times within the latest predetermined interval (Yes in S73), the control unit 100 (the processing unit 102) automatically displays an operation screen which displays merchandise keys of all merchandises included in the merchandise classification C stored in the associative operation area 1421 (S74). In order to sell a merchandise item drawn out of the storage unit 33, the operator H operates a merchandise key of the merchandise displayed on the operation screen. The control unit 100 performs a sales registration process for the merchandise corresponding to the operated merchandise key. Here, the operations of S71, S72, and S73 correspond to the determining unit 101.

The control unit 100 determines whether or not any merchandise key is operated (S75). When it is determined that any merchandise key is not operated (No in S75), the control unit 100 waits until any merchandise key is operated. When it is determined that any merchandise key is operated (Yes in S75), the control unit 100 performs a sales registration process for a merchandise item corresponding to the operated merchandise key (S76). Next, the control unit 100 determines whether or not the end key is operated (S77). When it is determined that the end key is operated (Yes in S77), the control unit 100 displays a sales registration screen including merchandise information of the merchandise subjected to the sales registration process in S76 (S78). Then, the control unit 100 returns to S11. When it is determined that the end key is not operated (No in S77), the control unit 100 returns to S74.

In addition, when it is determined that the received acceleration is not equal to or less than 15 cm/s² (No in S72), the control unit 100 determines that the wearable terminal 29 does not stay though it moved to the position of the storage unit 33, and then returns to S 11. In addition, when it is determined that the acceleration equal to or less than 15 cm/s² is not continuously received three times within the latest predetermined interval (No in S73), the control unit 100 determines that the wearable terminal 29 does not stay at the position of the storage unit 33, and then returns to S11.

Meanwhile, when it is determined that the wearable terminal 29 did not move from the home position to the position of the storage unit 33 (No in S71), this means that the wearable terminal 29 stays at none position of the storage units 31, 32, and 33 and, accordingly, the control unit 100 ignores the movement information received in S21 (S81). Then, the control unit 100 returns to S11.

Hereinafter, description will be made on a setting process for a distance of the wearable terminal 29 from the home position and an acceleration thereof, which is performed in S24 when the setting key 213 is operated. FIG. 12 is a flowchart illustrating a flow of a setting process in the POS terminal 1. When the setting key 213 is operated, the control unit 100 displays the setting screen 221 illustrated in FIG. 5 on the operator display unit 22 (S91).

The operator H inputs a distance to a storage unit and an acceleration at the storage unit in the setting screen 221. In this case, one of two input methods is used. The first input method is to automatically input a range of a movement distance and an acceleration based on the movement information received from the wearable terminal 29 worn by the operator H located at a position of a storage unit. The operator H operates the motion input key 262 to perform this first input method. The second input method is a method in which the operator H manually inputs a range of a movement distance from the home position and an acceleration in the displayed settings screen 221 through the operation unit 21.

The control unit 100 determines whether or not the motion input key 262 is operated (S92). When it is determined that the motion input key 262 is operated (Yes in S92), the control unit 100 determines whether or not the movement information is received from the wearable terminal 29 (S93). When it is determined that the movement information is not received (No in S93), the control unit 100 waits until the movement information is received. When it is determined that the movement information is received (Yes in S93), the control unit 100 determines whether or not an acceleration included in the received movement information is within a predetermined range (S94). When it is determined that the acceleration is within the predetermined range (Yes in S94), the control unit 100 determines whether or not the acceleration is within the predetermined range continuously a predetermined number of times in the latest predetermined interval(S95). When it is determined that the acceleration is within the predetermined range continuously the predetermined number of times in the latest predetermined interval(Yes in S95), the control unit 100 calculates a movement distance of the wearable terminal 29 from the home position based on the received movement information (S96). Then, the control unit 100 displays the acceleration included in the received movement information and the calculated movement distance of the wearable terminal 29 on the settings screen 221 (S97). Specifically, the control unit 100 displays the calculated movement distance of the wearable terminal 29 on the range section 224. At this time, the control unit 100 displays the calculated movement distance, as a reference value, with a certain range. In addition, the control unit 100 displays the received acceleration on the acceleration section 225. At this time, the control unit 100 displays the received acceleration, as a reference value, with a certain range. When it is determined that the motion input key 262 is not operated (No in S92), the control unit 100 displays the movement distance and the acceleration manually input by the operator (S97).

Next, the control unit 100 determines whether or not the registration key 261 is operated (S98). When it is determined that the registration key 261 is operated (Yes in S98), the control unit 100 (the setting unit 104) sets a range of a distance and an acceleration displayed on the settings screen 221 in the distance memory section 142 (S99). Then, the control unit 100 returns to S11. When it is determined that the registration key 261 is not operated (No in S98), the control unit 100 returns to S92.

According to the first embodiment, an operation screen for sales registration of a merchandise item belonging to a merchandise classification of a storage unit at which the operator H moves and stays is automatically displayed on the operator display unit 22. Therefore, when returning from the storage unit to the position of the POS terminal 1, the operator H need not perform an additional operation to display an operation screen.

In addition, in the first embodiment, for example, when a merchandise item belonging to the merchandise classification A requires age verification, the control part 100 may automatically display an operation screen for age verification, which is operated by a consumer, on the consumer display unit 23. Even in this case, when returning from the storage unit 31 to the position of the POS terminal 1, the operator H need not perform an operation to display an operation screen for age verification.

In addition, although, in the first embodiment, a screen of a merchandise item belonging to a merchandise classification of a storage unit at which the wearable terminal 29 worn by the operator H stays is displayed, the control unit 100 may detect a merchandise item drawn by the operator H out of the storage unit at which the wearable terminal 29 stays, and, at the same time, automatically perform a sales registration process for the drawn merchandise.

### (Second Embodiment)

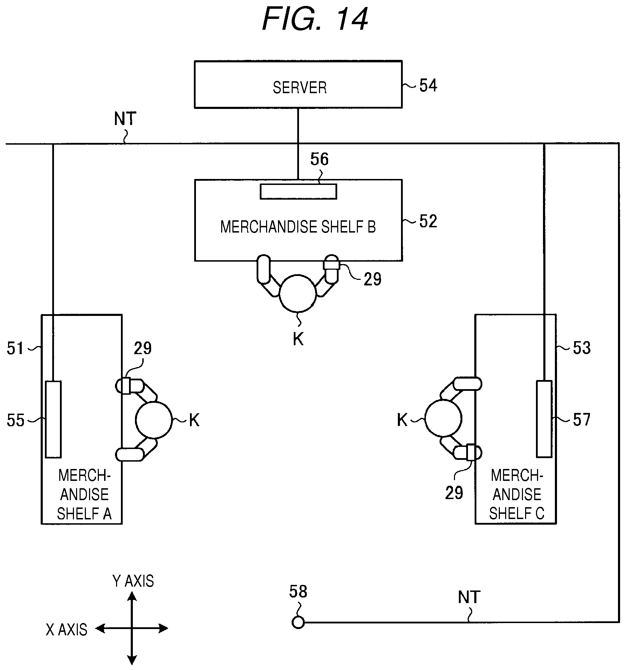

An information processing apparatus according to a second embodiment will now be described with reference to FIGS. 14 to 16. In the second embodiment, a server causes a display unit to display information, as an example of the information processing apparatus. The display unit has a liquid crystal screen and displays a still image or a moving picture, etc. on the screen to provide information to passersby and consumers. In the second embodiment, the same elements and functions as those of the first embodiment are denoted by the same reference numerals as used in the first embodiment, and explanation thereof is simplified or omitted by using or being associated with the reference numerals of the first embodiment.

FIG. 14 is a view illustrating a signage system according to the second embodiment. The signage system includes display units 55, 56, and 57 installed in merchandise shelves (a merchandise shelf A 51, a merchandise shelf B 52, and a merchandise shelf C 53) for merchandise display, a server 54, and a home position setting apparatus 58. The displays 55, 56 and 57, the server 54, and the home position setting apparatus 58 are electrically interconnected via a communication network NT such as an LAN. Each of the display units 55, 56, and 57 displays information transmitted from the server 54. The home position setting apparatus 58 includes a button (not illustrated) and transmits a home position signal to the server 54 when the button is operated.

When a consumer K (person) who wears the wearable terminal 29 takes an action of staying at a position of a merchandise shelf on which a merchandise is displayed, the signage system displays information related to the merchandise on the display units 55, 56, and 57. Here, the "action of staying at a position of a merchandise shelf on which a specific merchandise is displayed" refers to, for example, an action of staying at the merchandise shelf in a state where the consumer does not significantly move during a predetermined interval, and corresponds to, for example, an action of looking at a merchandise displayed on the merchandise shelf or an action of taking a merchandise in hand. Each of the display units 55, 56, and 57 displays a commercial (a still image or a moving picture) of the displayed merchandise or information presenting the displayed merchandise, which is transmitted from the server 54, as information related to the displayed merchandise. The information presenting the merchandise includes information on a place of origin of the merchandise, harvest time, a harvest method, a producer, etc.

As illustrated in FIG. 14, the merchandise shelf A 51, the merchandise shelf B 52, and the merchandise shelf C 53 are arranged in a store. The merchandise shelf A 51, the merchandise shelf B 52, and the merchandise shelf C 53 are separated from each other by a predetermined distance. A merchandise A is displayed on the merchandise shelf A 51. A merchandise B is displayed on the merchandise shelf B 52. A merchandise C is displayed on the merchandise shelf C 53. The display unit 55 is disposed on the merchandise shelf A 51. The display unit 56 is disposed on the merchandise shelf B 52. The display unit 57 is disposed on the merchandise shelf C 53. Positions of the merchandise shelf A 51, the merchandise shelf B 52, and the merchandise shelf C 53 correspond to particular positions. The consumer K who stays at the position of the merchandise shelf A 51 may look at the merchandise A or take the merchandise A in hand. In addition, the consumer K who stays at the position of the merchandise shelf A 51 may read information related to the merchandise A which is displayed on the display unit 55. The consumer K who stays at the position of the merchandise shelf B 52 may look at the merchandise B or take the merchandise B in hand. In addition, the consumer K who stays at the position of the merchandise shelf B 52 may read information related to the merchandise B which is displayed on the display unit 56. The consumer K who stays at the position of the merchandise shelf C 53 may look at the merchandise C or take the merchandise C in hand. In addition, the consumer K who stays at the position of the merchandise shelf C 53 may read information related to the merchandise C which is displayed on the display unit 57.

In the meantime, the server 54 is installed in the backyard of the store. The server 54 receives movement information, which is transmitted by the wearable terminal 29 worn by the consumer K, in the store and determines a movement distance of the wearable terminal 29 from the home position.

In addition, upon receiving home position reset information from the home position setting apparatus 58, the server 54 resets the distance of the wearable terminal 29 from the home position to "0" at that timing. That is, the server 54 sets the position of the wearable terminal 29 upon receiving the home position reset information, as a new home position. The home position setting apparatus 58 is installed near the entrance of the store. The home position setting apparatus 58 has a button. When the button is operated, the home position setting apparatus 58 transmits the home position reset information to the server 54.

The consumer K who entered the store first operates the button of the home position setting apparatus 58. Then, a position of the wearable terminal 29 worn by the consumer K at that point of time is stored as a home position in the server 54. That is, the wearable terminal 29 substantially sets a position of the home position setting apparatus 58 as the home position. Next, the consumer K directs to a merchandise shelf on which a merchandise in interest is displayed. Then, the wearable terminal 29 moves together with the consumer K. Every time receiving the movement information from the wearable terminal 29, the server 54 calculates a movement distance of the wearable terminal 29 from the home position.

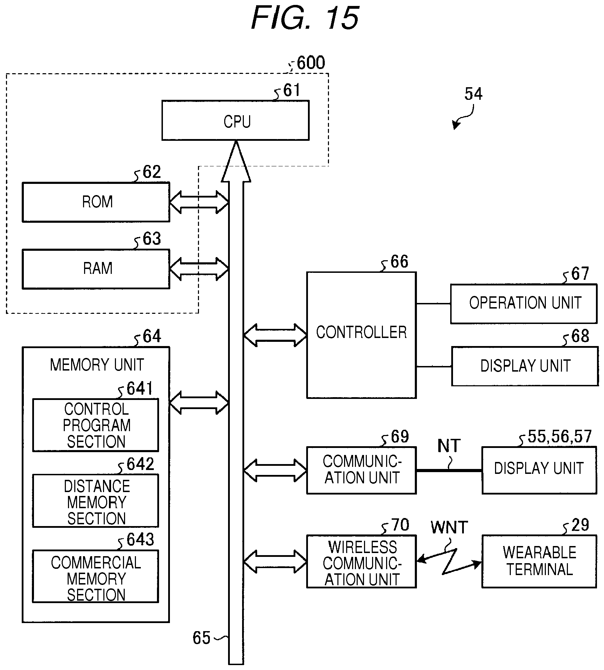

The server 54 includes a distance memory section 642 (see FIG. 15) having the same configuration as the distance memory section 142 illustrated in FIG. 6. Then, when the calculated movement distance and acceleration of the wearable terminal 29 are included in a range stored in the distance memory section 642, the server 54 determines that the wearable terminal 29 (that is, the consumer K) stays at a position of a particular one of the merchandise shelves A, B, and C. When it is determined that the wearable terminal 29 stays at the position of the particular merchandise shelf, the server 54 transmits information, which causes the display unit installed in the merchandise shelf to display an information commercial of the merchandise displayed on the merchandise shelf, to the display unit. The display unit which received the information displays a commercial related to the merchandise.

The hardware configuration of the server 54 will now be described. FIG. 15 is a block diagram illustrating the hardware configuration of the server 54. As illustrated in FIG. 15, the server 54 includes a CPU 61, a ROM 62, a RAM 63, a memory unit 64, etc. The CPU 61 is a control entity. Various software programs are stored in the ROM 62. Various types of data are deployed on the RAM 63. A variety of programs are stored in the memory unit 64. The CPU 61, the ROM 62, the RAM 63 and the memory unit 64 are interconnected via a data bus 65. The CPU 61, the ROM 62, and the RAM 63 constitute a control unit 600. That is, when the CPU 61 operates according to a control software program which is stored in the ROM 62 or the memory unit 64 and deployed on the RAM 63, the control unit 600 performs a control process to be described later.

The memory unit 64 is configured with a nonvolatile memory, such as a HDD or a flash memory, in which stored information is held even when power is turned off, and includes a control program section 641 storing a control software program.

The memory unit 64 includes a distance memory section 642 and a commercial memory section 643. The distance memory section 642 has the same configuration as the distance memory section 142 and stores a range of a distance from the home position to the position of the merchandise shelf A 51. In addition, the distance memory section 642 stores a range of a distance from the home position to the position of the merchandise shelf B 52. In addition, the distance memory section 642 stores a range of a distance from the home position to the position of the merchandise shelf C 53. When the movement distance of the wearable terminal 29 is within the range of the distance stored in the distance memory section 642, the control unit 600 determines that the wearable terminal is located at the position of any merchandise shelf.

In addition, the distance memory section 642 stores a range of an acceleration of the wearable terminal 29. When an acceleration of the wearable terminal 29 located at a merchandise shelf is within a range of an acceleration stored in the distance memory section 642, the control unit 600 determines that the wearable terminal 29 stays at the position of the merchandise shelf.

The commercial memory section 643 stores commercial information related to merchandises sold in the store. In this embodiment, the commercial memory section 643 stores a commercial related to the merchandise A, a commercial related to the merchandise B, and a commercial related to the merchandise C.

In addition, the control unit 600 is connected with an operation unit 67 and a display unit 68 via the data bus 65 and a controller 66. In addition, the control unit 600 is connected with a communication unit 69 via the data bus 65.

The communication unit 69 is connected with the display units 55, 56, and 57 via a communication network NT. The control unit 600 transmits the commercial related to the merchandise A to the display unit 55 via the communication unit 69. The control unit 600 transmits the commercial related to the merchandise B to the display unit 56 via the communication unit 69. The control unit 600 transmits the commercial related to the merchandise C to the display unit 57 via the communication unit 69. In addition, the communication unit 69 is connected with the home position setting apparatus 58 via the communication network NT. The communication unit 69 receives a home position signal from the home position setting apparatus 58.

In addition, the control unit 600 is connected with a wireless communication unit 70 via the data bus 65. The wireless communication unit 70 receives movement information from the wearable terminal 29 via a wireless communication network WNT.

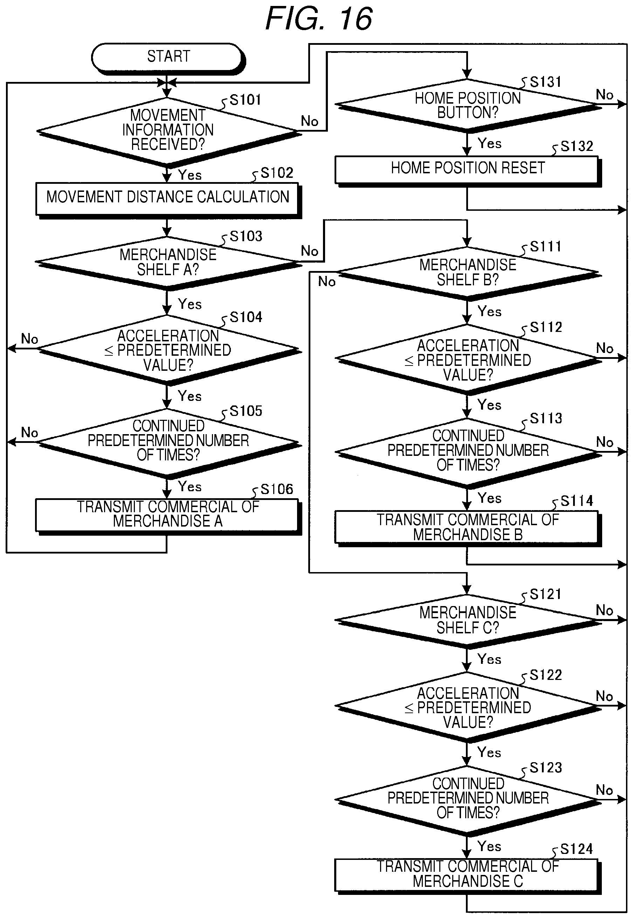

A control performed by the server 54 according to a control program stored in the control program section 641 will now be described. FIG. 16 is a flowchart illustrating a flow of a control process of the server 54. As illustrated in FIG. 16, the control unit 600 determines whether or not movement information is received from the wearable terminal 29 (S101). When it is determined that the movement information is received (Yes in S101), the control unit 600 (the movement distance calculating unit 103) calculates XYZ-axial movement distances from the home position of the wearable terminal 29 based on the received movement information (S102).

Next, the control unit 600 (the determining unit 101) performs operations of S103 to S105 based on the movement information received in S101 and the movement distance calculated in S102. The operations of S103 to S105 are the same as the operations of S32 to S34 of FIG. 10 and, therefore, explanation of which will be omitted. Then, when it is determined that an acceleration equal to or less than a predetermined value is continuously received three times within the latest predetermined interval (Yes in S105), the control unit 600 (the processing unit 102) reads the commercial of the merchandise A from the commercial memory section 643 and transmits the read commercial to the display unit 55 (S106). The display unit 55 displays the commercial of the merchandise A received from the server 54. Then, the control unit 600 returns to S101.

In addition, when it is determined in S103 that the wearable terminal 29 is not located at the position of the merchandise shelf A (No in S103), the control unit 600 (the determining unit 101) performs operations of S111 to S113. The operations of S111 to S113 are the same as the operations of S51 to S53 of FIG. 11 and, therefore, explanation of which will be omitted. Then, when it is determined that an acceleration equal to or less than a predetermined value (15 cm/s²) is continuously received three times within the latest predetermined interval (Yes in S 113), the control unit 600 (the processing unit 102) reads the commercial of the merchandise B from the commercial memory section 643 and transmits the read commercial to the display unit 56 (S114). The display unit 56 displays the commercial of the merchandise B received from the server 54. Then, the control unit 600 returns to S101.

In addition, when it is determined in S111 that the wearable terminal 29 is not located at the position of the merchandise shelf B (No in S111), the control unit 600 (the determining unit 101) performs operations of S 121 to S 123. The operations of S 121 to S123 are the same as the operations of S71 to S73 of FIG. 11 and, therefore, explanation of which will be omitted. Then, when it is determined that an acceleration equal to or less than a predetermined value (15 cm/s²) is continuously received three times within the latest predetermined interval (Yes in S123), the control unit 600 (the processing unit 102) reads the commercial of the merchandise C from the commercial memory section 643 and transmits the read commercial to the display unit 57 (S124). The display unit 57 displays the commercial of the merchandise C received from the server 54. Then, the control unit 600 returns to S101.

Meanwhile, when it is determined in S101 that the movement information is not received (No in S101), the control unit 600 determines whether or not the home position button 58 is operated by the consumer K (S131). When it is determined that the home position button 58 is operated (Yes in S131), the control unit 600 sets the position of the wearable terminal 29 at the time of operating the home position button 58, as a new home position, in the memory unit 64 (S132). This position serves as the home position until the home position button 58 is operated later. Then, the control unit 600 returns to S101. When it is determined that the home position button 58 is not operated (No in S131), the control unit 600 returns to S101.

According to the second embodiment, the server 54 determines a position of a merchandise shelf based on a movement distance of the wearable terminal 29 from the home position. Then, the control unit 600 causes a display unit installed in the merchandise shelf to display a commercial related to a merchandise displayed on the merchandise shelf. Accordingly, the consumer K may see the commercial of the merchandise displayed on the display unit when the consumer K stays at the position of the merchandise shelf on which the merchandise is displayed.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

For example, the POS terminal 1 has been described as an example of an information processing apparatus in the first embodiment, and the server 54 has been described as an example of the information processing apparatus in the second embodiment. However, the information processing apparatus of the present disclosure may be practiced according to other embodiments. For example, the present disclosure may be applied to office apparatuses installed in an office, such as a printer, a multifunction peripheral (MFP), and a scanner. For example, when a user (person) who wears the wearable terminal 29 takes a predetermined action around (at a particular position of) an office apparatus, a control unit of the office apparatus acts as a determining unit to determine that the user stays at the particular position. Then, the control unit acts as a processing unit to automatically perform a process according to the action. As an specific example, for a printer or an MFP, when the user who wears the wearable terminal 29 takes an action to go to a paper storage (a particular position) to pick up refill papers, a determining unit of the printer or the MFP determines that the user stays at the particular position, and a processing unit thereof automatically opens a paper cassette toward a paper refilling position.

In the embodiments, it is determined whether or not the wearable terminal 29 stays at a particular position, by calculating a movement distance based on the movement information transmitted by the wearable terminal 29. However, the present disclosure is not limited thereto, and for example, a global positioning system (GPS) may be used to determine whether or not the wearable terminal 29 stays at the particular position.

In the embodiments, an operator wears the wearable terminal 29. However, the present disclosure is not limited thereto, and the wearable terminal 29 may be in the form which can be carried by the operator H (e.g., a card or a mobile terminal).

In the embodiments, one person wears one wearable terminal 29. However, the present disclosure is not limited thereto, and different persons may wear different wearable terminals 29. In this case, specific numbers identifying the different wearable terminals 29 may be allocated to the different wearable terminals 29, and an information processing apparatus may identify the different wearable terminals 29 based on the specific numbers.

A software program executed in the POS terminal 1 of the embodiments is provided as an installable format or an executable file recorded in a computer-readable recording medium such as a CD-ROM, a flexible disk (FD), a CD-R, or a digital versatile disk (DVD).

The software program executed in the POS terminal 1 of the embodiments may be provided by storing the software program on a computer connected to a network such as the Internet and downloading the software program via the network. In addition, the software program executed in the POS terminal 1 of the embodiments may be provided or distributed via a network such as the Internet.

The software program executed in the POS terminal 1 of the embodiments may be stored in advance in a ROM or the like.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

## Claims

1. An information processing apparatus comprising:
a memory unit which stores information corresponding to at least a first predetermined position;
a display;
a transmitter configured to periodically transmit a signal indicating a position movement of the transmitter at predetermined intervals; and
a controller configured to
determine whether the transmitter is substantially paused at the first predetermined position based on the current position and acceleration indicated in the periodically transmitted signals,
control the display to display a predetermined first screen when the transmitter is determined to be substantially paused at the first predetermined position.

2. The apparatus according to claim 1, wherein:
the transmitter is associated with a gyro sensor which detects a moving direction of the transmitter and an acceleration sensor which detects an acceleration of the transmitter, and
the signal indicates that the position movement of the transmitter is based on output of the gyro sensor and the acceleration sensor.

3. The apparatus according to claim 1 or 2, wherein:
the memory unit further stores a home position of the transmitter, and
the controller determines whether the transmitter is substantially paused at the first predetermined position further based on the home position.

4. The apparatus according to any one of claims 1 to 3, wherein:
the controller is further configured to
receive a process termination input, and
set a current position of the transmitter as the home position in the memory unit, based on the signal transmitted by the transmitter at a time of receiving the process termination input.

5. The apparatus according to any one of claims 1 to 4, wherein:
the at least a first predetermined position includes the first predetermined position and a second predetermined position different from the first predetermined position, and
the controller is further configured to
determine whether the transmitter is substantially paused at the second predetermined position based on the current position and acceleration indicated in the periodically transmitted signals, and
control the display to display a predetermined second screen when the transmitter is determined to be substantially paused at the second predetermined position.

6. A method for processing information comprising the steps of:
storing in the memory unit, in advance, information corresponding to at least a first predetermined position;
periodically receiving, from a transmitter, a signal indicating a position movement of the transmitter;
determining whether the transmitter is substantially paused at the first predetermined position based on the current position and acceleration indicated in the periodically transmitted signals; and
controlling the display to display a predetermined first screen when the transmitter is determined to be substantially paused at the first predetermined position.

7. The method according to claim 6, wherein the received periodic signal indicated the position movement of the transmitter is based on output of a gyro sensor and an acceleration sensor associated with the transmitter.

8. The method according to claim 6 or 7, further comprising the steps of:
storing a home position of the transmitter, and
determining whether the transmitter is substantially paused at the first predetermined position further based on the home position.

9. The method according to any one of claims 6 to 8, further comprising the steps of:
receiving a process termination input, and
setting a current position of the transmitter as the home position in the memory unit, based on the signal transmitted by the transmitter at a time of receiving the process termination input.

10. The method according to any one of claims 6 to 9, wherein:
at least the first predetermined position includes the first predetermined position and a second predetermined position different from the first predetermined position, and
the method further comprising the steps of:
determining whether the transmitter is substantially paused at the second predetermined position based on the current position and acceleration indicated in the periodically transmitted signals, and
controlling the display to display a predetermined second screen when the transmitter is determined to be substantially paused at the second predetermined position.

11. A non-transitory computer readable medium containing a program that causes a computer including a memory unit and a display, to perform the method according to any one of claims 6 to 10.

12. An information processing apparatus comprising:
a memory unit which stores information corresponding to at least a first predetermined position;
a transmitter configured to periodically transmit a signal indicating a position movement of the transmitter at predetermined intervals;
a determining unit configured to determine whether the transmitter is substantially paused at the first predetermined position based on the current position and acceleration indicated in the periodically transmitted signals; and
a processing unit configured perform a process related to the first predetermined position when the transmitter is determined to be substantially paused at the first predetermined position.

13. The apparatus according to claim 12, wherein
the transmitter is associated with a gyro sensor which detects a moving direction of the transmitter and an acceleration sensor which detects an acceleration of the transmitter, and
the signal indicates the position movement of the transmitter is based on output of the gyro sensor and the acceleration sensor.

14. The apparatus according to claim 12 or 13, wherein
the memory unit further stores a home position of the transmitter, and
the determining unit determines whether the transmitter is substantially paused at the first predetermined position further based on the home position.

15. The apparatus according to any one of claims 12 to 14, further comprising:
a home setting unit configured to
receive a process termination input, and
set a current position of the transmitter as the home position in the memory unit, based on the signal transmitted by the transmitter at a time of receiving the process termination input.
